# EUROPEAN PATENT SPECIFICATION

(11) **EP 0 678 221 B1**
(45) Date of publication and mention of the grant of the patent: **04.06.1997**
(21) Application number: 94903960.6
(22) Date of filing: 06.01.1994
(51) Int. Cl.: H01R 9/05, H02G 15/08

(54) **CONNECTION AND TAP SLEEVE FOR COAXIAL CABLES OR THE LIKE**
VERBINDUNG ODER ABZWEIGMUFFE FUER KOAXIALKABEL ODER DERGLEICHEN
CONNEXION ET GAINE DE PRISE DESTINEES A DES CABLES COAXIAUX OU AUTRES DISPOSITIFS SIMILAIRES

(30) Priority: 07.01.1993 DE 4300177
(43) Date of publication of application: 25.10.1995
(73) Proprietor: WALTER ROSE GmbH & Co. KG, D-58093 Hagen (DE)
(72) Inventor: HILL, Günter, D-58093 Hagen (DE); FREMGEN, Dieter, D-42489 Wülfrath (DE); VOCK, Frank, D-44388 Dortmund (DE)
(74) Representative: Benson, John Everett
(86) International application number: GB9400023
(87) International publication number: WO9416473

(56) References cited:
- EP-A- 0 187 203
- US-A- 4 990 109

## Description

The invention relates to a connection and tap sleeve for coaxial cables or the like in wideband networks, comprising a sleeve body which, in use, is tightly closed, the sleeve body having cable inlets and cable outlets and being formed such that it can be opened and tightly closed again, and a printed circuit board mounted inside the sleeve body and having tap connections for splicing and/or distribution, whereby the damping values of the tap connections can be altered. "Damping values" herein refers to damping or attenuation values. A sleeve of this type is known from United States Patent 4990109.

In wide-band communications network of this kind, the signal strength made available to the individual end subscriber is determined through the damping dimension of the splicer/distributor through which the signal is de-coupled from the main circuit. Splicer/distributors with varying damping dimensions are required due to varying network structures. Thus, for example, the telecommunications authority of the Federal German Post Office uses splicer/distributors in their wideband communications networks with three different damping levels, namely 10, 15 and 20 dB.

A sleeve of this type is known from DE-40 04 811-A1, which is designed in such a way that a suitable path can be selected, depending on the damping desired. A heat-shrinkable sheath is provided as an external covering for this element.

A disadvantage of this known solution is that the electronic componentry must be available for any damping. It has also been shown that the technical effort required to wire up every individual outlet of the tap for every damping value required is very great and not justifiable from the economic point of view.

The invention is therefore intended to create a solution with which all outlets of a sleeve of this kind can be simply wired up for any damping value required. The operation should be simple and the sleeve should be satisfactorily tight, even after a switching process.

This problem is solved, using a connection and tap sleeve of the type initially described in that the printed circuit board has a line disconnection for each tap, the line disconnections individually discharging into plug connections, and a modular transfer element with a preset selectable damping value is provided, this modular transfer element being interchangeably inserted into the plug connections.

With the invention it is possible to wire up each tap simply on site at the required damping level, in that initially the sleeve is opened and then subsequently the required damping value is determined, for example by measuring the main circuit, and then, if necessary, the modular transfer element is replaced by another transfer element with a suitable damping value. The sleeve body is then closed tightly again. Obviously, standard sleeves can thus be used, which are simply converted after being installed, in that the sleeve is opened and the transfer elements are exchanged in an appropriate manner. In an advantageous refinement of the invention, it is intended that an individual modular transfer element be provided for each tap. Such a modular transfer element can have varying damping values and also other variations in form. For example, should a tap not be required, it can be bridged by a module with a simple wire bridge.

It is particularly advantageous, especially for standard applications, if the components required for several taps are integrated in a modular transfer element, the transfer element having a corresponding multiplicity of plug connections. If, for example, all components for all existing taps are integrated into a modular transfer element, only one module has to be changed in a replacement operation, which correspondingly simplifies operation.

In this form, it is preferable if the modular transfer element is provided with integrated internal conductor contacts and plug contacts for the external conductor. In this case, the entire circuit is structured as an IC-type module and is inserted into a sleeve housing on site.

According to invention, it is also planned for the sleeve body to have connections for the external conductor contacts of the modular transfer element. The electrical connection to the external conductor contacts of the incoming and outgoing cables is then brought about in known fashion by metallising the sleeve housing.

To guarantee that the sleeve can be opened and tightly closed again, it is particularly advantageous for the sleeve body to have a sleeve foundation and a closable sleeve cover, with means of sealing being provided between the sleeve foundation and the sleeve cover, as well as in the area of the cable inlets and cable outlets.

To guarantee, on the one hand, the sealing of the sleeve against environmental influences and, on the other hand, the high-frequency insulation of the sleeve housing, it is particularly preferable for the means of sealing between the sleeve foundation and the sleeve cover to be a ring-form combi-seal which consists of a sealing element and a screen element.

In this connection, it is advantageous for the sleeve cover to be formed in such a way that the compression forces for the sealing element do not exceed the resiliency of the screen element.

For effective sealing of the cable inlets and cable outlets, it is preferable for the means of sealing in the area of the cable inlets and cable outlets to take the form of a sealing chamber fully enclosing the individual cable in the operational position. In this connection, guide units should preferably be provided on the sleeve cover for the axial and/or radial compression of the means of sealing in the cable inlets and cable outlets during closure. When the sleeve cover is closed, the guide units bring about axial and/or radial compression of the sealing elements in the cable inlets and outlets, so that this area is automatically reliably sealed. Preferably the means of sealing are mounted in such a way that the screen material is protected against corrosive influences.

In a further significant development of the invention, the cable inlets and cable outlets are each equipped with tensile interception formed to accept varying cable diameters, which is preferably provided with cable centring. Here the activating elements of the tensile interception are preferably covered when the sleeve cover is in the closed condition, in such a way that the activating elements are safeguarded against unauthorised access when the sleeve is in the closed condition.

To guarantee a secure contact, it is preferable if the external conductor contacts take the form of spring cages which can be adjusted to the varying cable diameters.

To guarantee satisfactory closure of the sleeve, which ensures satisfactory tightness of the sleeve, it is advantageous for closure wedges to be provided on the sleeve foundation for the closure of the sleeve cover, which can be locked in the final position. This locking process automatically indicates to the fitter that the sleeves have closed properly, and at the same time this locking connection provides protection against any unintentional opening of the sleeve.

The invention also advantageously provides for mast fastening elements to be located on the sleeve foundation and/or on the sleeve cover.

The invention is clarified in greater detail below with reference to the diagrams. These show:
- Fig. 1: Side view of a sleeve according to invention with open sleeve cover

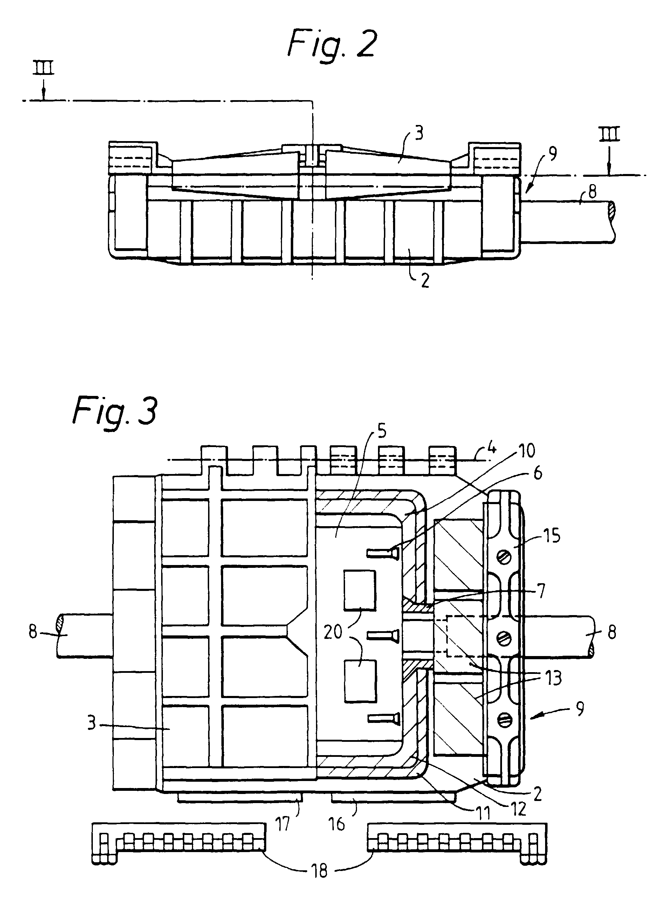

- Fig. 2: Longitudinal side view of a closed sleeve
- Fig. 3: Section along line III-III in Fig. 2
- Fig. 4: Printed circuit board of sleeve with modular transfer elements
- Figs.: 5 to 7 Block diagrams of various modular transfer elements and
- Fig. 8: Block diagram of a printed circuit board with a maximum of three taps, two taps being connected to transfer elements and one tap with a transfer element engaging over it.

A connection and tap sleeve according to invention for coaxial cables or the like in wide-band communications network is indicated by 1 throughout the diagrams. Here the sleeve body of the sleeve, 1, has a sleeve foundation, 2, and a sleeve cover, 3, which preferably are both made of plastic. The sleeve cover, 3, is flexibly articulated around a swivel pin, 4, on the sleeve foundation, 2, and can thus be opened and shut. The internal surfaces of the sleeve components, 2 and 3, are metallised in a known manner, and a printed circuit board, 5, is mounted inside the sleeve foundation 2. This printed circuit board, 5, is provided with internal conductor contacts, 6 and external conductor contacts, 7, on both sides, for the attachment of coaxial cables, 8. In addition, cable inlets or cable outlets, 9, which are formed in the sleeve foundation, 2, are provided for the coaxial cables, 8.

For the complete sealing of the sleeve, 1, means of sealing are provided which initially serve to bring about sealing between the sleeve foundation, 2, and the sleeve cover, 3, namely a ring-form combi-seal, 10, which is mounted on the top side of the sleeve foundation, 2, and embraces the entire area of the printed circuit board, 5, but not the area of the cable inlets or cable outlets, 9. This combi-seal, 10, consists of a sealing element, 11, and a screen element, 12, which guarantees high-frequency insulation.

For the sealing of the cable inlets and cable outlets, 9, a sealing chamber, 13, is provided in each cable inlet or cable outlet, filled, for example, with sealing gel, and completely enclosing the individual cable in the operational position. To guarantee a satisfactory sealing of the cable inlets, 9, when the sleeve cover, 3, is closed, guide units are provided on the sleeve cover, 3, for the radial and/or axial compression of the jointing compounds in the sealing chambers, 13. These guide units are marked 14 and take the form, for example, of clamping jaws.

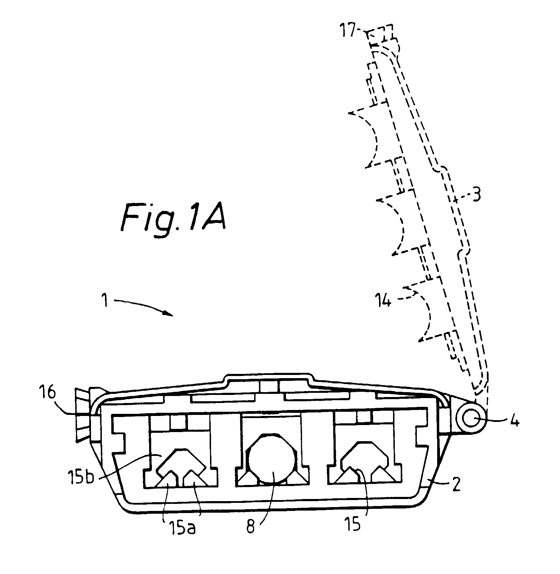

Each cable inlet or cable outlet is equipped with tensile interception, 15, which, as best shown in Fig. 1, takes the form of two wedge-shaped bottom sections, 15a, which centre the cable, and an arc-shaped top section, 15b. Here the two bottom sections, 15a, are connected to a spring (not shown) in such a way that they are pressed apart, in such a way that a cable, 8, can be fed in without any problem. To centre the cable, 8, and for adjustment to varying diameters, the arc-shaped upper section, 15b, can be pushed down to the bottom sections, 15a, the sections 15a and 15b being fitted with interacting wedge surfaces in such a way that when the top section, 15b, is pushed down to the bottom sections, 15a, the bottom sections, 15a, are compressed against the spring tension and vice versa. To displace the top section, 15b, activating elements are provided which are mounted in a fixed cross-piece, 25, of the sleeve body, 2, in such a way that they can be rotated and thus displaced. The top section, 15b, can thus be adjusted by turning an individual setting screw, 24. The setting screws, 24, are thus not accessible when the sleeve, 1, is closed, so that the tensile interception, 15, is ensured when the sleeve, 1, is closed.

So that the sleeve, 1, can be closed properly and tightly after being opened, cross-pieces, 16 and 17, are provided on the side of the sleeve foundation, 2, and the sleeve cover, 2, opposite the swivel pin, 4, onto which closure wedges, 18, can be pushed, which can be locked in the final position on the cross-pieces, 16, 17. This guarantees that, on the one hand, when closure takes place it can be ensured that the sleeve, 1, is properly closed, and, on the other hand, it is guaranteed that the sleeve, 1, can not be opened inadvertently. A sleeve, 1, which can be opened and reliably tightly closed again, is thus available.

Because the sleeve, 1, can be opened and closed again, the printed circuit board, 5, the form of which is essential for the invention, is freely accessible at any time.

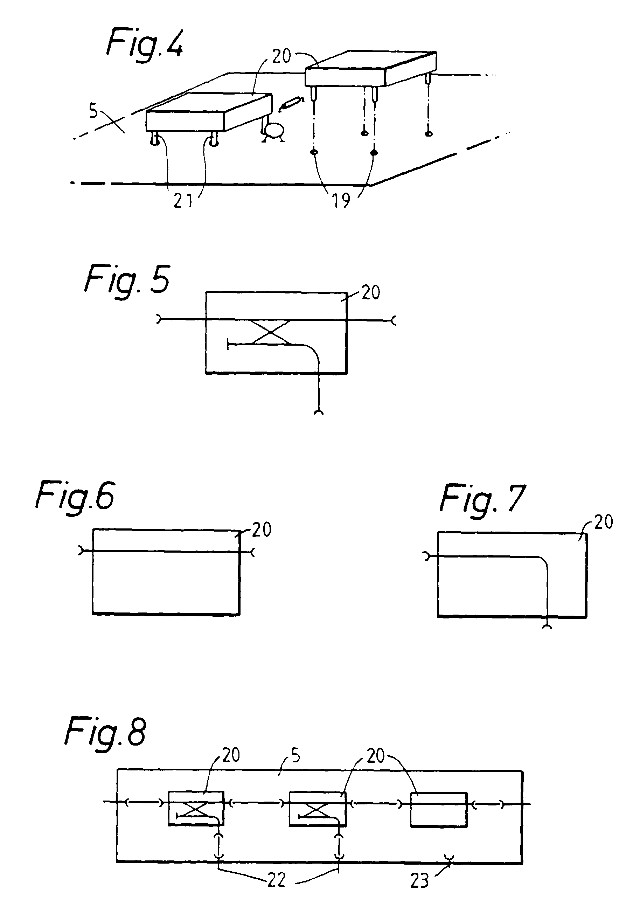

As can best be seen in Fig.4, the printed circuit board, 5, is provided with disconnections for each tap, each of which discharges in plug connections, 19, an interchangeable transfer element, 20, which is provided with corresponding plug connections, 21, being plugged into these plug connections, 19. Thus each transfer element can have a different damping value, e.g. 10, 15 and 20 dB.

An individual modular transfer element, 20, can also be provided for each tap, or, as an alternative, the components required for several taps can be integrated in a modular transfer element, 20 (not shown in diagram). Such a transfer element has a corresponding large number of plug connections, 21.

The modular transfer element, 20, is preferably equipped with integrated internal conductor contacts and plug contacts for the external conductor (not shown in detail).

Fig. 5 is a block diagram which shows an example of a transfer element, 20, according to invention. Other developments are shown in Figs. 6 and 7, the transfer elements, 20, shown there each being equipped with wire bridges for taps not required.

Fig. 8 shows a block diagram of a board, 5, for a maximum of three taps, two taps being connected by transfer elements. These taps are numbered as 22, whilst the tap numbered as 23 is bridged over by a transfer element, 20, with a wire bridge.

The sleeve according to invention can obviously be used to put varying circuits and taps into effect without changing the printed circuit board, 5, through suitable exchange of transfer elements, 20. This is possible, on the one hand, when the sleeve, 1, is first installed, but it is also possible, on the other hand, if the sleeve has been installed earlier. In fact, this merely requires the sleeve cover, 2, to be opened and the transfer elements, 20, can then be suitably replaced. The sleeve can then be tightly closed again.

## Claims

1. A connection and tap sleeve for coaxial cables or the like in wideband networks, comprising a sleeve body (1) which, in use, is tightly closed, the sleeve body having cable inlets (9) and cable outlets (9) and being formed such that it can be opened and tightly closed again, and a printed circuit board (5) mounted inside the sleeve body and having tap connections for splicing and/or distribution, whereby the damping values of the tap connections can be altered, characterized in that the printed circuit board (5) has a line disconnection for each tap, the line disconnections individually discharging into plug connections (19), and a modular transfer element (20) with a preset selectable damping value is provided, this modular transfer element being interchangeably inserted into the plug connections (19).

2. A connection and tap sleeve according to Claim 1, characterised in that an individual modular transfer element (20) is provided for each tap.

3. A connection and tap sleeve according to Claim 1, characterised in that the necessary components for several taps are integrated in a modular transfer element (20), the transfer element (20) having a corresponding multiplicity of plug connections (21).

4. A connection and tap sleeve according to any preceding claim characterised in that the modular transfer element (20) is provided with integrated internal conductor contacts and plug contacts for the external conductor.

5. A connection and tap sleeve according to Claim 4, characterised in that the sleeve body (1) has connections for the external conductor contacts of the modular transfer element (20).

6. A connection and tap sleeve according to any preceding claim, characterised in that the sleeve body (1) has a sleeve foundation (2) and a closable sleeve cover (3), and that means of sealing (10, 13) are provided between the sleeve foundation (2) and the sleeve cover (3), as well as in the area of the cable inlets and cable outlets (9).

7. A connection and tap sleeve according to Claim 6, characterised in that the means of sealing between the sleeve foundation (2) and the sleeve cover (3) is a ring-form combi-seal (10) which consists of a sealing element (11) and a screen element (12).

8. A connection and tap sleeve according to Claim 7, characterised in that the sleeve cover (3) is formed in such a way that the compression forces for the sealing element (11) do not exceed the resiliency of the screen element (12).

9. A connection and tap sleeve according to any one of Claims 6 to 8, characterised in that the means of sealing in an area of the cable inlets and cablc outlets (9) takes the form of the sealing chamber (13) which completely encloses the individual cable (8) in the operational position.

10. A connection and tap sleeve according to any one of Claims 6 to 9, characterised in that guide units (14) are provided on the sleeve cover (3) for the axial and/or radial compression of the means of sealing (13) in the cable inlets and cable outlets (9) when closure takes place.

11. A connection and tap sleeve according to any one of Claims 6 to 10, characterised in that the means of sealing are mounted in such a way that the screen material is protected against corrosive influences.

12. A connection and tap sleeve according to any one of Claims 6 to 11, characterised in that the cable inlets and cable outlets (9) are each equipped with tensile interception (15) formed to receive varying cable diameters.

13. A connection and tap sleeve according to Claim 12, characterised in that the tensile interception (15) is provided with cable centring (15a, 15b).

14. A connection and tap sleeve according to Claim 12 or Claim 13, characterised in that activating elements (24) of the tensile interception (15) are covered by the sleeve cover (3) in the closed condition.

15. A connection and tap sleeve according to any preceding claim, characterised in that the external conductor contacts (7) consist of spring cages.

16. A connection and tap sleeve according to any preceding claim, characterised in that closure wedges (18), which can be locked in the final position, are provided on the sleeve foundation (2) for the closing of the sleeve cover (3).

17. A connection and tap sleeve according to any preceding claim, characterised in that mast fastening elements are provided on the sleeve foundation (2) and/or on the sleeve cover (3).

## Patentansprüche

1. Verbindungs- und Abgriffsmuffe für Koaxialkabel oder dergleichen in Breitbandnetzen, die folgendes aufweist: einen Muffenkörper (1), der im Gebrauch dicht geschlossen ist, wobei der Muffenkörper Kabeleinlässe (9) und Kabelauslässe (9) aufweist und derart geformt ist, daß er geöffnet und wieder dicht geschlossen werden kann, und eine gedruckte Leiterplatte (5), die im Innenraum des Muffenkörpers angeordnet ist und Abgriffsverbindungen zum Spleißen und/oder für die Verbindung besitzt, so daß dadurch die Dämpfungswerte der Abgriffsverbindungen geändert werden können,
dadurch gekennzeichnet,
daß die gedruckte Leiterplatte (5) eine Leitungsunterbrechung für jeden Abgriff aufweist, wobei die Leitungsunterbrechungen einzeln in Steckverbindungen (19) abgehen, und daß ein modulares Übertragungselement (20) mit einem vorgegebenen wählbaren Dämpfungswert vorgesehen ist, wobei dieses modulare Übertragungselement austauschbar in die Steckverbindungen (19) eingesetzt ist.

2. Verbindungs- und Abgriffsmuffe nach Anspruch 1,
dadurch gekennzeichnet,
daß ein individuelles modulares Übertragungselement (20) für jeden Abgriff vorgesehen ist.

3. Verbindungs- und Abgriffsmuffe nach Anspruch 1,
dadurch gekennzeichnet,
daß die erforderlichen Komponenten für mehrere Abgriffe in einem modularen Übertragungselement (20) integriert sind, wobei das Übertragungselement (20) eine entsprechende Vielzahl von Steckverbindungen (21) aufweist.

4. Verbindungs- und Abgriffsmuffe nach einem der vorhergehenden Ansprüche,
dadurch gekennzeichnet,
daß das modulare Übertragungselement (20) mit integrierten inneren Leiterkontakten und Steckkontakten für den externen Leiter versehen ist.

5. Verbindungs- und Abgriffsmuffe nach Anspruch 4,
dadurch gekennzeichnet,
daß der Muffenkörper (1) Verbindungen für die äußeren Leiterkontakte des modularen Übertragungselementes (20) aufweist.

6. Verbindungs- und Abgriffsmuffe nach einem der vorhergehenden Ansprüche;
dadurch gekennzeichnet,
daß der Muffenkörper (1) eine Muffenbasis (2) und einen schließbaren Muffendeckel (3) aufweist,
und daß Abdichtungseinrichtungen (10, 13) zwischen der Muffenbasis (2) und dem Muffendeckel (3) sowie in dem Bereich der Kabeleinlässe und der Kabelauslässe (9) vorgesehen sind.

7. Verbindungs- und Abgriffsmuffe nach Anspruch 6,
dadurch gekennzeichnet,
daß die Abdichtungseinrichtungen zwischen der Muffenbasis (2) und dem Muffendeckel (3) eine ringförmige Kombinationsdichtung (10) aufweisen, die aus einem Abdichtungselement (11) und einem Abschirmelement (12) besteht.

8. Verbindungs- und Abgriffsmuffe nach Anspruch 7,
dadurch gekennzeichnet,
daß der Muffendeckel (3) derart geformt ist, daß die auf das Abdichtungselement (11) ausgeübten Kompressionskräfte die Elastizität des Abschirmelementes (12) nicht überschreiten.

9. Verbindungs- und Abgriffsmuffe nach einem der Ansprüche 6 bis 8,
dadurch gekennzeichnet,
daß die Abdichtungseinrichtungen in einem Bereich der Kabeleinlässe und der Kabelauslässe (9) die Form einer Abdichtungskammer (13) annehmen, welche das einzelne Kabel (8) in der Betriebsstellung vollständig umschließt.

10. Verbindungs- und Abgriffsmuffe nach einem der Ansprüche 6 bis 9,
dadurch gekennzeichnet,
daß Führungseinheiten (14) an dem Muffeldeckel (3) für die axiale und/oder radiale Kompression der Abdichtungseinrichtungen (13) in den Kabeleinlässen und den Kabelauslässen (9) vorgesehen sind, wenn das Schließen stattfindet.

11. Verbindungs- und Abgriffsmuffe nach einem der Ansprüche 6 bis 10,
dadurch gekennzeichnet,
daß die Abdichtungseinrichtungen in der Weise montiert sind, daß das Abschirmmaterial gegen Korrosionseinflüsse geschützt ist.

12. Verbindungs- und Abgriffsmuffe nach einem der Ansprüche 6 bis 11,
dadurch gekennzeichnet,
daß die Kabeleinlässe und die Kabelauslässe (9) jeweils mit einer Zugentlastung (15) ausgerüstet sind, die so geformt ist, daß sie unterschiedliche Kabeldurchmesser aufnehmen kann.

13. Verbindungs- und Abgriffsmuffe nach Anspruch 12,
dadurch gekennzeichnet,
daß die Zugentlastung (15) mit einer Kabelzentrierung (15a, 15b) versehen ist.

14. Verbindungs- und Abgriffsmuffe nach Anspruch 12 oder Anspruch 13,
dadurch gekennzeichnet,
daß Aktivierungselemente (24) der Zugentlastung (15) von dem Muffendeckel (3) in dem geschlossenen Zustand abgedeckt sind.

15. Verbindungs- und Abgriffsmuffe nach einem der vorhergehenden Ansprüche,
dadurch gekennzeichnet,
daß die äußeren Leiterkontakte (7) aus Federkäfigen bestehen.

16. Verbindungs- und Abgriffsmuffe nach einem der vorhergehenden Ansprüche,
dadurch gekennzeichnet,
daß Verschlußkeile (18), die in der endgültigen Stellung arretiert werden können, an der Muffenbasis (2) zum Schließen des Muffendeckels (3) vorgesehen sind.

17. Verbindungs- und Abgriffsmuffe nach einem der vorhergehenden Ansprüche,
dadurch gekennzeichnet,
daß Mastbefestigungselemente an der Muffenbasis (2) und/oder an dem Muffendeckel (3) vorgesehen sind.

## Revendications

1. Manchon de connexion et de prise pour câbles coaxiaux et analogues dans des réseaux à large bande, comportant un corps (1) de manchon qui, lors de l'utilisation, est fermé hermétiquement, le corps de manchon ayant des entrées (9) de câbles et sorties (9) de câbles et étant formé de manière qu'il puisse être ouvert et refermé hermétiquement, et une plaquette (5) à circuits imprimés montée à l'intérieur du corps du manchon et comportant des connexions de prises pour épissurage et/ou distribution, grâce à quoi les valeurs d'amortissement des connexions de prises peuvent être modifiées, caractérisé en ce que la plaquette (5) à circuits imprimés présente une déconnexion de ligne pour chaque prise, les déconnexions de ligne se déchargeant individuellement dans des connexions à fiches (19), et un élément de transfert modulaire (20) ayant une valeur d'amortissement pouvant être choisie et préréglée est prévu, cet élément de transfert modulaire étant inséré de façon interchangeable dans les connexions à fiches (19).

2. Manchon de connexion et de prise selon la revendication 1, caractérisé en ce qu'un élément de transfert modulaire individuel (20) est prévu pour chaque prise.

3. Manchon de connexion et de prise selon la revendication 1, caractérisé en ce que les composants nécessaires pour plusieurs prises sont intégrés dans un élément de transfert modulaire (20), l'élément de transfert (20) ayant un nombre correspondant de connexions à fiches (21).

4. Manchon de connexion et de prise selon l'une quelconque des revendications précédentes, caractérisé en ce que l'élément de transfert modulaire (20) est pourvu de contacts de conducteurs intérieurs intégrés et de contacts à fiches pour le conducteur extérieur.

5. Manchon de connexion et de prise selon la revendication 4, caractérisé en ce que le corps (1) du manchon comporte des connexions pour les contacts de conducteurs extérieurs de l'élément de transfert modulaire (20).

6. Manchon de connexion et de prise selon l'une quelconque des revendications précédentes, caractérisé en ce que le corps (1) du manchon comporte une embase (2) de manchon et un capot (3) de manchon pouvant être fermé, et en ce que des moyens d'obturation étanche (10, 13) sont prévus entre l'embase (2) du manchon et le capot (3) du manchon, ainsi que dans la zone des entrées de câbles et des sorties de câbles (9).

7. Manchon de connexion et de prise selon la revendication 6, caractérisé en ce que les moyens d'obturation étanche entre l'embase (2) du manchon et le capot (3) du manchon comprennent un joint d'obturation étanche combiné (10) de forme annulaire qui est constitué d'un élément (11) d'obturation étanche et d'un élément de blindage (12).

8. Manchon de connexion et de prise selon la revendication 7, caractérisé en ce que le capot (3) du manchon est formé de manière que les forces de compression pour l'élément d'obturation étanche (11) ne dépassent pas l'élasticité de l'élément de blindage (12).

9. Manchon de connexion et de prise selon l'une quelconque des revendications 6 à 8, caractérisé en ce que les moyens d'obturation étanche dans une zone des entrées de câbles et des sorties de câbles (9) prennent la forme d'une chambre (13) d'obturation étanche qui renferme complètement le câble individuel (8) dans la position de fonctionnement.

10. Manchon de connexion et de prise selon l'une quelconque des revendications 6 à 9, caractérisé en ce que des unités de guidage (14) sont prévues sur le capot (3) du manchon pour la compression axiale et/ou radiale des moyens d'obturation étanche (13) dans les entrées de câbles et les sorties de câbles (9) lorsque la fermeture a lieu.

11. Manchon de connexion et de prise selon l'une quelconque des revendications 6 à 10, caractérisé en ce que les moyens d'obturation étanche sont montés de manière que la matière de blindage soit protégée d'effets corrosifs.

12. Manchon de connexion et de prise selon l'une quelconque des revendications 6 à 11, caractérisé en ce que les entrées de câbles et les sorties de câbles (9) sont pourvues chacune d'un moyen (15) d'interception de traction formé de façon à recevoir des câbles de divers diamètres.

13. Manchon de connexion et de prise selon la revendication 12, caractérisé en ce que le moyen (15) d'interception de traction est pourvu d'un moyen (15a, 15b) de centrage de câble.

14. Manchon de connexion et de prise selon la revendication 12 ou la revendication 13, caractérisé en ce que des éléments d'activation (24) du moyen (15) d'interception de traction sont recouverts par le capot (3) du manchon dans l'état fermé.

15. Manchon de connexion et de prise selon l'une quelconque des revendications précédentes, caractérisé en ce que les contacts (7) de conducteurs extérieurs sont constitués de cages à ressort.

16. Manchon de connexion et de prise selon l'une quelconque des revendications précédentes, caractérisé en ce que des coins (18) de fermeture, qui peuvent être verrouillés dans la position finale, sont prévus sur l'embase (2) du manchon pour la fermeture du capot (3) du manchon.

17. Manchon de connexion et de prise selon l'une quelconque des revendications précédentes, caractérisé en ce que des éléments de fixation à un mât sont prévus sur l'embase (2) du manchon et/ou sur le capot (3) du manchon.
